# EUROPÄISCHE PATENTANMELDUNG

(11) **EP 1 467 340 A1**
(43) Veröffentlichungstag der Anmeldung: **13.10.2004**
(21) Anmeldenummer: 03405237.3
(22) Anmeldetag: 08.04.2003
(51) Int. Cl.: G09F 19/22, G09F 19/00

(54) **Verfahren zum Erzeugen eines Bildes**

(71) Anmelder: Ideeundtechnik, 57074 Siegen (DE)
(72) Erfinder: Schröter, Gerd Alwin, 57074 Siegen (DE)
(74) Vertreter: Roshardt, Werner Alfred, Dipl.-Phys.

(57) **Zusammenfassung**

Bei einem Verfahren, um mittels einer Sprühvorrichtung (11) ein Bild auf einer Fläche aus Schnee zu erzeugen, insbesondere eine Werbebotschaft in einem Wintersportgebiet, wird die Sprühvorrichtung (11) an einen ersten Ort auf der Fläche bewegt, darauf wird die Position der Sprühvorrichtung (11) bestimmt. Daraufhin wird, abhängig von der bestimmten Position, Farbe, insbesondere flüssige Farbe, auf die Fläche aufgesprüht. Schliesslich wird die Sprühvorrichtung (11) an einen weiteren Ort auf der Fläche bewegt. Eine Vorrichtung zum Erzeugen eines Bildes auf einer Fläche aus Schnee umfasst Positionsbestimmungsmittel (8.1, 8.2, 9) zum Bestimmen einer Position der Vorrichtung, Sprühmittel (11) zum Aufsprühen von Farbe auf die Fläche und Steuerungsmittel (9) zum automatischen Steuern der Sprühmittel (11) in Abhängigkeit der bestimmten Position.

## Beschreibung

### Technisches Gebiet

Die Erfindung betrifft ein Verfahren sowie eine Vorrichtung zum Erzeugen eines Bildes, insbesondere einer Werbebotschaft in einem Wintersportgebiet.

### Stand der Technik

Es ist seit langer Zeit bekannt, in Sportstadien Banden, die z. B. ein Spielfeld für Fussball oder Eishockey umgeben, mit Schriftzügen, Logos und Bildern zu versehen, die vornehmlich Werbecharakter haben. Diese Werbung erreicht oft nicht nur das beim Spiel anwesende Publikum, sondern mittels Fernsehübertragungen einen weitaus grösseren Personenkreis.

Bei Skisport- und anderen Wintersportanlässen, die oft ebenfalls über das Fernsehen verbreitet werden, können bedruckbare Banden nur beschränkt angebracht werden. Schutznetze am Rand der Pisten sind z. B. aus technischen Gründen meist so ausgebildet, dass ein Bedrucken nicht in einer Weise möglich ist, dass Werbebotschaften aus einer grösseren Entfernung erkannt werden könnten. In Wintersportgebieten kann Werbung deshalb oft nur über herkömmliche, aufgestellte Schilder verbreitet werden. Diese führen aber oft zu Behinderungen und können meist nur an Orten aufgestellt werden, die kaum eingesehen werden können. Eine andere Möglichkeit ist das Aufspannen von bedruckten Planen auf den Boden. Diese sind aber ebenfalls nur schlecht sichtbar und lassen sich nur an Orten anbringen, welche abseits von der Piste und dem Zuschauerraum liegen. Grosse bedruckte Planen sind zudem teuer und müssen gegen Windeinfluss aufwändig verankert werden.

### Darstellung der Erfindung

Aufgabe der Erfindung ist es, ein dem eingangs genannten technischen Gebiet zugehörendes Verfahren zu schaffen, welches das Anbringen und Verbreiten von Werbung in Wintersportgebieten verbessert.

Die Lösung der Aufgabe ist durch die Merkmale des Anspruchs 1 definiert. Gemäss der Erfindung wird mittels einer Sprühvorrichtung das Bild auf einer Fläche aus Schnee erzeugt, wobei zunächst die Sprühvorrichtung an einen ersten Ort auf der Fläche bewegt wird, worauf mehrmals ein Kreisprozess durchgeführt wird, der die folgenden Schritte umfasst:
a) Bestimmen einer Position der Sprühvorrichtung;
b) Aufsprühen von Farbe, insbesondere flüssiger Farbe, auf die Fläche, abhängig von der bestimmten Position;
c) Bewegen der Sprühvorrichtung an einen weiteren Ort auf der Fläche.

In Wintersportgebieten sind typischerweise grosse Schneeflächen vorhanden. All diese Flächen lassen sich mit dem erfindungsgemässen Verfahren als Werbefläche nutzen. Dabei erfolgt keine Behinderung von Benutzern der Schneefläche, z. B. Skifahrern, oder von Zuschauern eines Wintersportanlasses. Das Bild lässt sich kostengünstig und äusserst grossflächig erzeugen und ist widerstandsfähig gegen Windeinfluss. Ein Entfernen eines einmal erzeugten Bildes ist nicht nötig: Solange die Werbebotschaft bestehen bleiben soll, muss zur Auffrischung des Bildes das erfindungsgemässe Verfahren regelmässig durchgeführt werden, z. B. einmal wöchentlich. Je nach Witterungseinflüssen kann das Intervall angepasst werden. Wird die Auffrischung nicht mehr durchgeführt, verschwindet das Bild nach einer gewissen Zeit durch die Witterungseinflüsse von selbst.

Die Anwendung des Verfahrens ist nicht auf die Erzeugung von Werbebotschaften beschränkt. Es lassen sich ebenfalls Sponsoringangaben oder Ortsangaben für die Orientierung der Wintersportler oder Touristen erzeugen. Auch Richtungsangaben, Warn- und Hinweiszeichen auf Skipisten, Langlaufloipen, Winterwanderwegen etc. lassen sich mit dem erfindungsgemässen Verfahren erzeugen.

Bevorzugt wird die Sprühvorrichtung an einem Fahrzeug, insbesondere einem Pistenfahrzeug oder einem Schneemobil, angeordnet, wobei die Sprühvorrichtung mit dem Fahrzeug über die Fläche verfahren wird. Mit einem motorisierten Fahrzeug lassen sich grosse Flächen in kurzer Zeit abfahren, so dass grossflächige Bilder im Schnee erzeugt werden können, die weitherum gut sichtbar sind. Pistenfahrzeuge und Schneemobile sind in Wintersportgebieten üblicherweise vorhanden, so dass für die Durchführung des erfindungsgemässen Verfahrens keine Anschaffung eines zusätzlichen, teuren Fahrzeugs nötig ist. Eine Nachrüstung der vorhandenen Fahrzeuge, deren Bedienung überdies den lokalen Angestellten vertraut ist, reicht aus. Die Nachrüstung von Pistenfahrzeugen (Pistenraupen) mit Sonderwerkzeugen, z. B. Walzen, Schaufeln etc., ist üblich. Pistenfahrzeuge weisen überdies eine grosse Breite auf, so dass mit einer Sprühvorrichtung, die im Wesentlichen deren Breite abdeckt, auch grosse Bilder in kurzer Zeit erzeugt werden können. Schneemobile sind dem gegenüber flexibler im Gebrauch und besonders bei kleineren Bildern einfacher, günstiger und schneller im Einsatz.

Alternativ kann eine entsprechend kompakt gebaute Sprühvorrichtung auf einem Schlitten, einem Wagen oder einem Traggestell angeordnet sein, welche manuell über die Schneefläche bewegt werden können.

Mit Vorteil erfolgt die Bestimmung der Position mittels eines Navigationssystems, insbesondere GPS oder GLONASS. Derartige Systeme erlauben eine schnelle, genaue und absolute Bestimmung der Position und sind kostengünstig. Sie erfordern keine lokalen Installationen zur Festlegung einer Ortsreferenz. Sind die Positionsdaten des zu erzeugenden Bildes einmal bestimmt, kann das Verfahren an derselben Stelle beliebig oft durchgeführt werden, die Farbe wird immer an denselben Stellen aufgesprüht. Dies vereinfacht das Auffrischen eines bereits früher gesprühten Bildes.

Die Anwendung erstreckt sich damit ebenfalls auf die Markierung von Pistenbegrenzungen. Durch ein erfindungsgemässes Verfahren erzeugte, als durchgehende Linien gestaltete, Begrenzungen weisen gegenüber den üblichen Pfosten den Vorteil auf, dass sie dem Pistenbenutzer überall den Rand der Piste anzeigen und nicht nur bei gewissen Stellen, die durch Pfosten markiert sind. Das Risiko, im Nebel die markierte Piste unwissentlich zu verlassen, wird vermieden. Mit Hilfe des Navigationssystems kann die Pistenbegrenzung zuverlässig regelmässig erneuert werden. Die optimale Sicherheit bei der Markierung des Pistenrands bietet eine Kombination der herkömmlichen Pfosten mit der durchgehend markierten Linie.

Alternativ können andere, am Benutzungsort verfügbare, Navigationssysteme eingesetzt werden. Auch eine Orientierung bezüglich lokal angeordneter Referenzpunkte, z. B. Infrarot-, Funk-, oder Mikrowellensender, ist zur Positionsbestimmung tauglich.

Vorzugsweise wird im Kreisprozess die Position der Sprühvorrichtung, welche bestimmt worden ist, gespeichert. Das Aufsprühen der Farbe erfolgt dann abhängig von den bereits gespeicherten Positionen. Dadurch wird ermöglicht, dass die Sprühvorrichtung mehrmals an denselben Ort auf der Fläche bewegt werden kann, ohne dass ein mehrfaches Aufsprühen von Farbe erfolgt. Vielmehr ist auf Grund der Speicherung sämtlicher bereits abgedeckter Gebiete der Fläche bekannt, welche Partien bereits eingefärbt sind. Neben unnötigem Verbrauch von Farbe wird dadurch auch verhindert, dass eine ungleichmässige Farbverteilung auf der Fläche aus Schnee entsteht. Der Betreiber der Sprühvorrichtung kann diese also beliebig über die Fläche aus Schnee bewegen, die einzige Bedingung für ein vollständiges Bild ist, dass jeder Bereich der Fläche mindestens einmal durch die Sprühvorrichtung abgedeckt worden ist.

Alternativ kann die Speicherung der Positionsdaten der bereits abgedeckten Gebiete unterbleiben. In diesem Fall ist es von Vorteil, wenn die Sprühvorrichtung durch den Betreiber manuell ein- und ausgeschaltet werden kann. Der Betreiber wird dann die Sprühvorrichtung immer dann ausschalten, wenn er ein bereits abgedecktes Gebiet erneut passiert. Die Sprühvorrichtung wird ausserdem in diesem Fall mit Vorteil regelmässig, z. B. entlang von parallelen geraden Bahnen, über die Fläche bewegt, so dass jeder Teil der Fläche möglichst genau einmal passiert wird.

Mit Vorteil wird die momentane Geschwindigkeit der Sprühvorrichtung bezüglich der Fläche bestimmt und die Sprühleistung, mit welcher die Farbe ausgesprüht wird, an die momentane Geschwindigkeit angepasst. Wird nämlich die Sprühvorrichtung mit einer hohen Geschwindigkeit über die Fläche aus Schnee verfahren, ergibt sich bei konstanter Sprührate eine geringere Farbdichte als bei einer geringeren Geschwindigkeit. Die Anpassung der Menge der aufgesprühten Farbe (bzw. der Sprührate) führt zu einem gleichmässigen Farbauftrag und damit zu einer konstanten Farbdichte.

Alternativ kann die Geschwindigkeit, mit welcher die Sprühvorrichtung über die Fläche aus Schnee bewegt wird, fest eingestellt werden, z. B. mittels eines Tempomaten für das die Sprühvorrichtung tragende Fahrzeug.

Bevorzugt wird das Bild erzeugt, indem Bilddaten in Abhängigkeit von Winkeln zwischen der Fläche aus Schnee und einer vorgegebenen Beobachtungsrichtung verzerrt werden. Blickt man aus einem gewissen Winkel auf ein Bild, das auf einer Schneefläche angeordnet ist, ergeben sich je nach Winkel gewisse Verzerrungen. In den meisten Fällen sind jedoch gewisse bevorzugte Beobachtungspositionen vorgegeben und dadurch gewisse bevorzugte Beobachtungsrichtungen. Durch ein entsprechendes Verzerren des aufzusprühenden Bildes ergibt sich für Beobachter, die sich ungefähr entlang der vorgegebenen Beobachtungsrichtung aufhalten, ein entzerrtes Bild, also ein Bild, das aufrecht zu stehen scheint, ohne Verkürzungen in irgend einer Richtung. Dies schafft einerseits eine bessere Lesbarkeit und/oder Erkennbarkeit des Bildes, andererseits wirkt ein solches, scheinbar schräg auf der Schneefläche stehendes Bild auffälliger als eines, das offensichtlich flach auf dem Schneefeld liegt. Die Verzerrung lässt sich überdies dazu nutzen, gewisse dreidimensionale Effekte zu erzeugen.

Bevorzugte Beobachtungsrichtungen ergeben sich durch bevorzugte Aufenthaltsorte von Beobachtern, z. B. Ortschaften, Seil- oder Gondelbahnen bzw. andere Transportmittel, Skipisten, Gastwirtschaften etc. Für die Werbung besonders interessant sind in dieser Hinsicht aber auch Standorte von Fernsehkameras (z. B. bei Sportübertragungen), Webcams, Wetterkameras etc.

Wenn die Bilder aus stark voneinander verschiedenen Richtungen gut sichtbar sein sollen, oder falls die Beobachter nahezu senkrecht auf die Schneefläche sehen, wird bevorzugt von einer Verzerrung abgesehen.

Mit Vorteil wird als Farbe flüssige Lebensmittelfarbe verwendet. Flüssige Farbe verbindet sich am besten mit dem Schnee und lässt sich technisch am einfachsten sprühen. Lebensmittelfarbe eignet sich gut zum Einfärben von Schneeflächen und weist zudem den Vorteil auf, dass eine gesundheitliche Schädigung von Personen oder Tieren bzw. eine Schädigung von Pflanzen ausgeschlossen wird.

Alternativ können andersartige flüssige Farbstoffe oder auch feste Farben (Pigmentpartikel) verwendet werden.

Eine Vorrichtung zum Erzeugen eines Bildes auf einer Fläche aus Schnee weist Positionsbestimmungsmittel zum Bestimmen einer Position der Vorrichtung, Sprühmittel zum Aufsprühen von Farbe auf die Fläche und Steuermittel zum automatischen Steuern der Sprühmittel in Abhängigkeit von der bestimmten Position auf.

Die Vorrichtung weist mit Vorteil Mittel zum Anbringen der Vorrichtung an ein Schneefahrzeug, insbesondere ein Pistenfahrzeug oder ein Schneemobil, auf. Gängige Pistenfahrzeuge weisen Befestigungseinrichtungen auf, an welchen einfach und schnell Sonderwerkzeuge (wie Walzen, Schaufeln etc.) angebracht und wieder entfernt werden können. Die Mittel zum Anbringen sind also bevorzugt diesen Befestigungseinrichtungen angepasst, so dass die Vorrichtung einfach nachgerüstet werden kann. Auch Schneemobile weisen oft nutzbare Befestigungsmittel, wie z. B. Anhängerkupplungen, auf.

Die erfindungsgemässe Vorrichtung ist bevorzugt an einen bestimmten Fahrzeugtyp angepasst und besitzt Sprühmittel, die ungefähr die Breite des Fahrzeugs abdecken.

Alternativ weist die erfindungsgemässe Vorrichtung eigene Mittel auf, mit welchen es über die Schneefläche bewegt werden kann, z. B. Rollen, Walzen oder Kufen. Je nach Grösse kann es zur Unterstützung einen Motor umfassen. Wahlweise kann die Vorrichtung auf einer Tragevorrichtung, z. B. in der Art eines Rucksacks, angeordnet sein.

Bevorzugt umfassen die Positionsbestimmungsmittel einen Empfänger für ein Navigationssystem, insbesondere für GPS oder GLONASS. Solche Empfänger sind einfach erhältlich, im Wesentlichen wartungsfrei und kostengünstig. Besonders wenn differentielles GPS eingesetzt wird, bieten sie zudem eine sehr grosse Genauigkeit, was eine hohe Auflösung des aufzusprühenden Bildes ermöglicht.

Besonders bevorzugt umfassen die Positionsbestimmungsmittel mindestens zwei, voneinander beabstandet angeordnete Empfänger für das Navigationssystem. Dies ermöglicht nebst der Bestimmung der Position auch die Bestimmung der Orientierung der Vorrichtung, ohne dass Informationen über frühere Positionen oder über Fahrgeschwindigkeiten benötigt werden. Dadurch kann die Steuerung der Sprühmittel weiter verbessert werden.

Vorzugsweise umfassen die Steuerungsmittel Speichermittel zum Speichern bestimmter Positionen und Mittel zum automatischen Steuern der Sprühmittel abhängig von den gespeicherten Positionen.

Mit Vorteil weist die Vorrichtung ausserdem Mittel zum Bestimmen einer momentanen Geschwindigkeit der Vorrichtung bezüglich der Fläche auf, wobei die Steuerungsmittel Mittel zum Steuern der Sprühmittel abhängig von der bestimmten momentanen Geschwindigkeit umfassen. Die Mittel zum Bestimmen der momentanen Geschwindigkeit können mit dem Empfänger für das Navigationssystem oder mit bereits an einem Fahrzeug vorhandenen Geschwindigkeitsmessern zusammenwirken oder auch davon unabhängig sein. Die Mittel zum Steuern der Sprühmittel können z. B. regelbare Ventile oder regelbare Pumpen umfassen.

Vorzugsweise umfassen die Steuerungsmittel Mittel zum Verzerren von Bilddaten in Abhängigkeit von Winkeln zwischen der Fläche und einer vorgegebenen Beobachtungsrichtung.

Alternativ können die Bilddaten vorgängig, z. B. auf einem Personal Computer (PC), bearbeitet und verzerrt werden. Die Einspeisung der bearbeiteten Daten zu den Steuerungsmitteln erfolgt in an sich bekannter Art und Weise, z. B. mittels Datenträgern wie Datenkarten, CD-ROMs oder DVDs, drahtgebunden über ein Datenkabel oder drahtlos mittels GSM, UMTS, WLAN etc.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer Pistenraupe mit der erfindungsgemässen Vorrichtung in Seitenansicht;
- Fig. 2: eine schematische Darstellung der Pistenraupe in Draufsicht;
- Fig. 3: eine schematische Darstellung einer Sprühvorrichtung in Seitenansicht;
- Fig. 4: eine schematische Darstellung der Schaltung einer erfindungsgemässen Vorrichtung;
- Fig. 5A-C: eine schematische Darstellung des erfindungsgemässen Verfahrens;
- Fig. 6A: eine schematische Darstellung eines Schriftzugs, erzeugt mit dem erfindungsgemässen Verfahren, gesehen aus einer vorbestimmten Beobachtungsposition;
- Fig. 6B: eine schematische Darstellung des Schriftzugs, aufgesprüht auf eine Schneefläche.

Grundsätzlich sind in den Figuren gleiche Teile mit gleichen Bezugszeichen versehen.

### Wege zur Ausführung der Erfindung

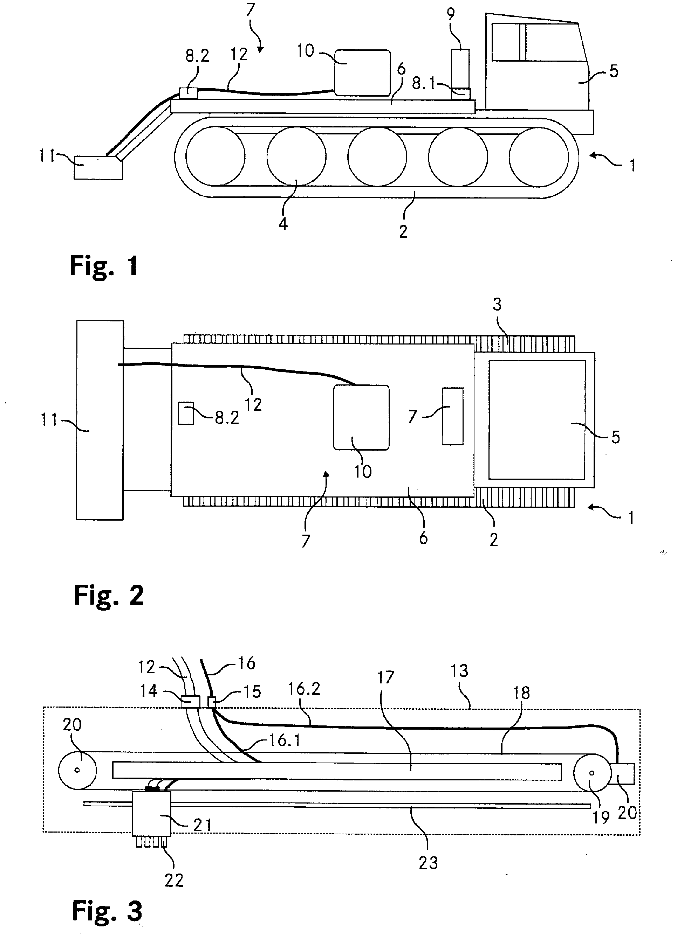

Die Figuren 1 und 2 sind schematische Darstellungen einer Pistenraupe mit der erfindungsgemässen Vorrichtung in Seitenansicht bzw. in Draufsicht. Die Pistenraupe 1 ist an sich bekannt. Sie weist an ihrer Unterseite seitlich jeweils eine Raupe 2 bzw. 3 auf, welche jeweils über mehrere Rollen 4 läuft. Am vorderen Ende der Pistenraupe 1 ist eine Führerkabine 5 angeordnet, in welcher sämtliche Bedienungselemente für die Pistenraupe 1 angeordnet sind. Auf ihrer Oberseite weist die Pistenraupe 1 eine Ladefläche 6 auf. Je nach Verwendung der Pistenraupe 1 kann diese Ladefläche 6 bestimmte Aufsätze wie Kabinen, aufklappbare Walzen usw. tragen.

Die erfindungsgemässe Vorrichtung 7 zum Erzeugen eines Bildes auf einer Schneefläche umfasst zwei GPS-Empfänger 8.1 und 8.2., eine Steuerung 9, einen Farbtank 10, eine Sprühvorrichtung 11, sowie eine Leitung 12. Der erste GPS-Empfänger 8.1 ist mittig am vorderen Ende der Ladefläche 6 angeordnet, der zweite GPS-Empfänger 8.2 ist mittig am hinteren Ende der Ladefläche 6 angebracht. Oberhalb des ersten GPS-Empfängers 8.1 ist die Steuerung 9 angeordnet. Diese umfasst im Wesentlichen einen üblichen PC (Personal Computer), welcher durch ein Gehäuse vor Kälte, Nässe und Vibrationen geschützt ist. Die Stromversorgung der Steuerung 9 erfolgt über die Fahrzeugbatterie. Der Farbtank 10 ist mittig auf der Ladefläche angebracht. Er umfasst vier Einzeltanks für die Farben schwarz, gelb, cyan und magenta. Mittels der Leitung 12, welche entsprechend vier gesonderte Kanäle aufweist, ist der Farbtank 10 mit der Sprühvorrichtung 11 verbunden.

Die Figur 3 ist eine schematische Darstellung einer Sprühvorrichtung 11 in Seitenansicht. Die Sprühvorrichtung ist von einem Gehäuse 13 umgeben und umfasst an ihrer oberen Seite einen Eingang 14 für die Leitung 12 sowie einen Eingang 15 für die Steuerleitung 16, mit welcher die Sprühvorrichtung 11 gesteuert wird. Die Steuerleitung 16 verzweigt sich beim Eingang 15, im Innern des Gehäuses 13 in eine Sprühkopf-Steuerleitung 16.1 und in eine Antriebs-Steuerleitung 16.2.

Die Leitung 12 für die Farbe sowie die Sprühkopf-Steuerleitung 16.1 sind im Innern des Gehäuses 13 in einen Kanal 17 geführt, welcher gegen oben offen ist. Vor dem Kanal 17 ist ein Zahnriemen 18 angeordnet, welcher über zwei Rollen 19, 20 geführt ist. Die Rolle 19 ist von einem Schrittmotor 20 angetrieben, welcher von der Antriebs-Steuerleitung 16.2 einerseits gesteuert ist und andererseits mit Energie versorgt wird. Mittels des Schrittmotors 20 und des Zahnriemens 18 lässt sich der Sprühkopf 21, welcher am Zahnriemen 18 befestigt ist, entlang der Sprühvorrichtung 11 längs hin und her bewegen.

Die Länge der Leitung 12 sowie der Sprühkopf-Steuerleitung 16.1, welche im Kanal 17 geführt sind und durch einen Durchbruch längs der Unterseite des Kanals 17 hinaustreten, ist so gewählt, dass die Bewegung des Sprühkopfs 21 nicht behindert wird.

Der Sprühkopf 21 weist an seiner Unterseite vier Düsenreihen 22 auf, jeweils eine für die Farben schwarz, gelb, cyan und magenta. Er ist auf einer Längsschiene 23 gelagert. Die Sprühvorrichtung 11 funktioniert also im Wesentlichen in der Art eines üblichen Tintenstrahldruckers, wobei sie aber ca. 5-10mal grösser dimensioniert ist.

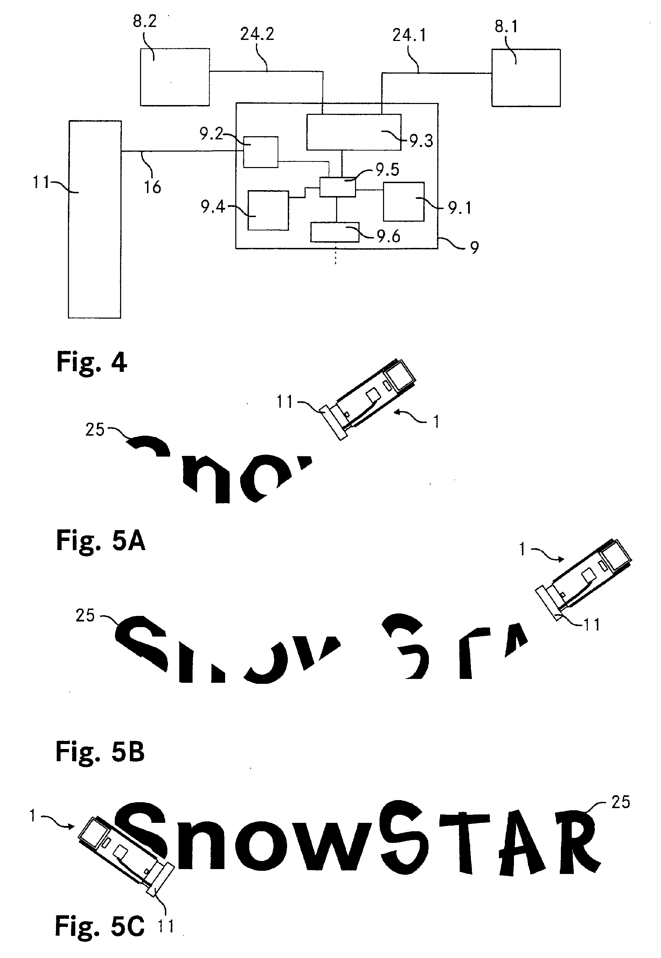

Die Figur 4 zeigt eine schematische Darstellung der Schaltung einer erfindungsgemässen Vorrichtung. Die Sprühvorrichtung 11 wird von der Steuerung 9 über die Steuerleitung 16 kontrolliert. Die Steuerung 9 umfasst einen Rechner, im Wesentlichen einen üblichen portablen Personal Computer (Notebook), welcher Speichermittel 9.1 zum Speichern der benötigten Daten, insbesondere Bilddaten und Positionsangaben, Kontrollmittel 9.2 zum Kontrollieren der Sprühvorrichtung 11, insbesondere einen entsprechenden Gerätetreiber und Verarbeitungsmittel 9.3 zum Verarbeiten der Positionsinformationen umfasst. Diese Positionsinformationen werden über Datenleitungen 24.1, 24.2 von den zwei GPS-Empfängern 8.1, 8.2 an die Steuerung 9 übertragen.

Dadurch, dass sowohl die Position des vorderen GPS-Empfängers 8.1, als auch die Position des hinteren GPS-Empfängers 8.2 bestimmt werden, ist es möglich, nebst der Position der Pistenraupe auch deren Orientierung zu ermitteln. Es ist also jederzeit genau bekannt, welcher Bereich von der Sprühvorrichtung 11 gerade abgedeckt ist.

Die Steuerung 9 umfasst im Weiteren Software 9.4 zum Steuern des Gesamtverfahrens. Diese läuft auf einer zentralen Steuereinheit 9.5 ab und kontrolliert insbesondere, welche Teile des zu sprühenden Bildes bereits erzeugt worden sind. Dazu werden die entsprechenden, von den Verarbeitungsmitteln 9.3 erhaltenen Positionsdaten in den Speichermitteln 9.1 abgelegt. In der zentralen Steuereinheit 9.5 erfolgt dann an jeder Position ein Vergleich mit den gespeicherten früheren Positionsdaten, woraus sich ergibt, ob die Sprühvorrichtung 11 aktiviert werden muss. Die zentrale Steuereinheit 9.5 leistet ausserdem die Verarbeitung der in den Speichermitteln 9.1 abgelegten Bild- und Positionsdaten zu Steuerdaten für die Sprühvorrichtung 11, welche weiter zu den Kontrollmitteln 9.2 übertragen werden.

Schliesslich ist in der Steuerung 9 auch eine Schnittstelle 9.6 enthalten. Diese weist Mittel zum Empfang von neuen Bilddaten, Positionsdaten und neuer Software auf. Derartige Daten können über ein Speichermedium, z. B. eine Diskette, CD-ROM oder DVD, im entsprechenden Laufwerk des Personal Computers eingelesen werden. Wahlweise werden sie kabelgebunden, z. B. über eine USB-Schnittstelle oder Ethernet, zur Steuerung 9 übertragen, oder es sind Mittel zum drahtlosen Empfang von Daten, z. B. über GSM oder Bluetooth vorgesehen.

Die Bewegung des Sprühkopfs ist so gesteuert, dass bei einer kontinuierlichen Bewegung der Pistenraupe die gesamte Fläche, die von der Pistenraupe befahren wird, von der Sprühvorrichtung abgedeckt ist. Dazu weist der Sprühkopf eine bestimmte Sprühtiefe auf, welche der Länge einer Düsenreihe entspricht. Während der Querbewegung des Sprühkopfs in die eine Richtung sind die Düsen aktiv und erzeugen also aufgrund der Vorwärtsbewegung der Pistenraupe eine leicht schräge, gesprühte Bahn. Die Rückbewegung des Sprühkopfs, während der nicht gesprüht wird, erfolgt sehr schnell, so dass in dieser Zeit die Pistenraupe nur eine geringe Strecke zurücklegt. Die nächste gesprühte Bahn verläuft dann parallel zur ersten Bahn. Damit keine Leerstreifen zwischen den gesprühten Bahnen auftreten, werden die Geschwindigkeiten des Sprühkopfs sowie die Geschwindigkeit der Pistenraupe der Sprühtiefe angepasst (sowie der aktuellen Breite des Sprühbereichs, die kleiner sein kann als die maximal mögliche Breite).

Die Figuren 5A-5C sind eine schematische Darstellung des erfindungsgemässen Verfahrens. Ein Bild, im dargestellten Beispiel der Schriftzug 25 "SnowStar", wird spurweise auf der Schneefläche erzeugt. Die Spurbreite entspricht dabei im Wesentlichen der Breite der Sprühvorrichtung 11, welche am hinteren Ende der Pistenraupe 1 angeordnet ist. Der Weg, den die Pistenraupe 1 auf der Fläche beschreibt, ist beliebig wählbar, denn sobald ein bereits bearbeiteter Abschnitt erneut passiert wird, deaktiviert die Steuerung die Sprühvorrichtung 11. Sobald die Sprühvorrichtung 11 wieder in eine noch unbearbeitete Region verfahren wird, wird sie durch die Steuerung wieder aktiviert. Je nach Beschaffenheit des Schnees und zur Effizienzsteigerung kann es natürlich trotzdem vorteilhaft sein, den Weg so zu wählen, dass jeder Bereich der Fläche möglichst nur einmal passiert wird, so dass die bereits besprühten Flächen optimal erhalten bleiben und nicht von den Raupen erneut bearbeitet werden. Besonders bei Schneeflächen, die an ihrem Rand beschränkt sind, z. B. durch Bäume, Felsen oder Steilhänge, ist ein solcher Weg aber oft nicht möglich.

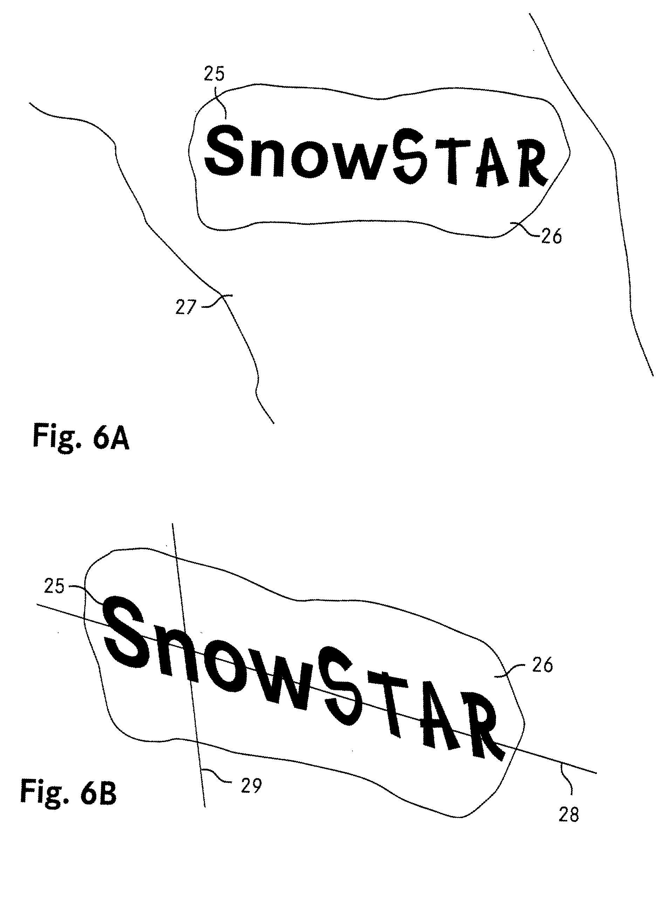

Die Figur 6A zeigt eine schematische Darstellung eines Schriftzugs, gesehen aus einer vorbestimmten Beobachtungsposition, z. B. einem Kamerastandort bei einer Sportübertragung. Der Schriftzug 25 ist auf einer Schneefläche 26 aufgesprüht worden, welche sich an einem Hang 27 befindet. Die vorbestimmte Beobachtungsposition befindet sich links unterhalb der Schneefläche in einer Richtung, welche einen Winkel von ca. 35° zur Normalen der Schneefläche 26 einschliesst. Der Schriftzug erscheint aus dieser Beobachtungsposition (und anderen Beobachtungspositionen entlang der Beobachtungsrichtung) aufrecht und richtig proportioniert.

Die Figur 6B zeigt eine schematische Darstellung des Schriftzugs 25, wie er auf die Schneefläche 26 aufgesprüht ist, gesehen aus einer Position senkrecht über der Schneefläche 26, aus derselben Entfernung wie der Beobachtungsposition in der Figur 6A. Damit er aus der vorbestimmten Beobachtungsposition den gewünschten Anblick bietet, ist der Schriftzug 25 zum Aufsprühen verzerrt worden. Seine Horizontalachse 28 und seine Vertikalachse 29 schliessen einen Winkel ein, ausserdem ist der Schriftzug entlang der beiden Achsen 28, 29 gestreckt, um den scheinbaren Längenverlust auszugleichen, welcher sich aufgrund der schrägen Beobachtungsrichtung ergibt. Das Bild erscheint also aus der vorbestimmten Beobachtungsrichtung vollständig, aus allen anfallenden Winkeln, entzerrt.

Die erfindungsgemässe Vorrichtung, besonders die Steuerung, der Farbtank und die Sprühvorrichtung, kann in eine einzige Einheit integriert werden, die bevorzugt am hinteren Ende der Ladefläche der Pistenraupe angeordnet wird. Dies vereinfacht die Anbringung und die Entfernung der Vorrichtung, was besonders dann vorteilhaft ist, wenn die Pistenraupe nebenbei (oder hauptsächlich) zu ihren üblichen Aufgaben, wie Pistenbearbeitung, eingesetzt wird. Einer der GPS-Empfänger ist bei dieser Variante mit Vorteil ebenfalls in die Einheit integriert, während der zweite in einem gewissen Abstand davon anbringbar ist.

Bezüglich Anordnung der verschiedenen Teile der Vorrichtung sind auch andere Varianten möglich. Die Steuerung kann z. B. in die Führerkabine integriert werden, so dass sie besser vor Witterungseinflüssen geschützt ist und ein weniger aufwändiges Gehäuse benötigt. Die Vorrichtung kann wahlweise aber auch ferngesteuert werden; d. h., der Hauptteil der Steuerung, insbesondere die zentrale Steuereinheit, die Software, die Schnittstelle und die Speichermittel, sind unabhängig von der Pistenraupe, z. B. in einem Betriebsgebäude, angeordnet und kommunizieren mit der erfindungsgemässen Vorrichtung z. B. über Funk, GSM oder einen anderen drahtlosen Kanal.

Die Pistenraupe kann ausserdem spezielle Mittel zur Präparation der Schneefläche für das Aufsprühen der Farbe aufweisen, z. B. Walzen mit einer bestimmten Oberflächenstruktur, die in Fahrtrichtung vor der Sprühvorrichtung angeordnet sind. Solche Walzen ebnen die Schneefläche und erzeugen gegebenenfalls eine Oberflächenstruktur, die für das Aufnehmen der Farbe oder für das Betrachten des fertigen Bildes optimal geeignet ist.

Weiter kann die Pistenraupe zusätzliche Mittel zum Nachbearbeiten der besprühten Fläche umfassen. Solche Mittel, z. B. andersartige Walzen, unterstützen z. B. das Einarbeiten der gesprühten Farbe in die Schneeoberfläche, führen gleichsam zu einer Fixierung der aufgesprühten Farbe.

Die Sprühvorrichtung kann wahlweise auch an einer anderen Stelle am Pistenfahrzeug angeordnet sein, z. B. vorne oder seitlich. Die Anordnung hinter den Raupen ist aber deshalb bevorzugt, weil dadurch der bearbeitete, eingefärbte Abschnitt der Schneefläche nicht mehr vom Fahrzeug befahren werden muss.

Schliesslich kann die Sprühvorrichtung anders aufgebaut oder gesteuert werden. Anstelle eines einzelnen entlang der ganzen Fahrzeugbreite verfahrbaren Sprühkopfs können mehrere verfahrbare Sprühköpfe die Fahrzeugbreite abdecken. Dies ermöglicht bei gleicher Geschwindigkeit des Sprühkopfs eine höhere Geschwindigkeit des Fahrzeugs. Anstelle des verfahrbaren Sprühkopfs kann eine querliegende Düsenreihe vorgesehen werden, welche die gesamte Fahrzeugbreite abdeckt. Sprühsysteme und -verfahren aus dem Gebiet des Tintenstrahldrucks, aber auch aus der Airbrush-Technik können herangezogen werden. Die Steuerung der Sprühvorrichtung kann auch so erfolgen, dass während beider Querbewegungen des Sprühkopfs Farbe abgegeben wird. Falls Bahnen erzeugt werden sollen, welche genau quer zur Fahrtrichtung des Fahrzeugs liegen, kann die Sprühvorrichtung schräg angeordnet sein, angepasst an die Geschwindigkeit des Fahrzeugs. Abhängig vom zu sprühenden Bild kann ausserdem eine kleinere oder grössere Zahl von Farben verwendet werden, z. B. für monochrome Bilder oder für Bilder mit Spezialeffekten (Silber- oder Goldfarben, fluoreszierende Farben).

Kleiner dimensionierte, aber im Prinzip ähnlich aufgebaute Vorrichtungen eignen sich zur Befestigung an anderen Fahrzeugen, z. B. an Schneemobilen.

Zusammenfassend ist festzustellen, dass die Erfindung ein Verfahren und eine Vorrichtung zum Erzeugen eines Bildes schafft, welche das Anbringen und Verbreiten von Werbung in Wintersportgebieten verbessern.

## Patentansprüche

1. Verfahren, um mittels einer Sprühvorrichtung (11) ein Bild (25) auf einer Fläche (26) aus Schnee zu erzeugen, wobei zunächst die Sprühvorrichtung (11) an einen ersten Ort auf der Fläche (26) bewegt wird, worauf mehrmals ein Kreisprozess durchgeführt wird, der die folgenden Schritte umfasst:
a) Bestimmen einer Position der Sprühvorrichtung (11);
b) Aufsprühen von Farbe, insbesondere flüssiger Farbe, auf die Fläche (26), abhängig von der bestimmten Position;
c) Bewegen der Sprühvorrichtung (11) an einen weiteren Ort auf der Fläche (26).

2. Verfahren nach Anspruch 1, wobei die Sprühvorrichtung (11) an einem Fahrzeug (1), insbesondere einem Pistenfahrzeug oder einem Schneemobil, angeordnet wird, und wobei die Sprühvorrichtung (11) mit dem Fahrzeug (1) über die Fläche (26) verfahren wird.

3. Verfahren nach Anspruch 1 oder 2, wobei die Bestimmung der Position mittels eines Navigationssystems, insbesondere GPS oder GLONASS, erfolgt.

4. Verfahren nach einem der Ansprüche 1 bis 3, wobei der Kreisprozess weiter folgende Schritte umfasst:
d) Speichern der bestimmten Position der Sprühvorrichtung (11),
e) Aufsprühen der Farbe abhängig von den bereits gespeicherten Positionen.

5. Verfahren nach einem der Ansprüche 1 bis 4, welches weiter folgende Schritte umfasst:
f) Bestimmen einer momentanen Geschwindigkeit der Sprühvorrichtung (11) bezüglich der Fläche (26);
g) Anpassen einer Sprühleistung, mit welcher die Farbe ausgesprüht wird, an die momentane Geschwindigkeit.

6. Verfahren nach einem der Ansprüche 1 bis 5, welches weiter folgenden Schritt umfasst:
h) Erzeugen des Bildes (25) durch Verzerren von Bilddaten in Abhängigkeit von Winkeln zwischen der Fläche (26) und einer vorgegebenen Beobachtungsrichtung.

7. Verfahren nach einem der Ansprüche 1 bis 6, wobei als Farbe flüssige Lebensmittelfarbe verwendet wird.

8. Vorrichtung zum Erzeugen eines Bildes (25) auf einer Fläche (26) aus Schnee, mit Positionsbestimmungsmitteln (8.1, 8.2, 9.3) zum Bestimmen einer Position der Vorrichtung, Sprühmitteln (11) zum Aufsprühen von Farbe auf die Fläche (26) und Steuerungsmitteln (9) zum automatischen Steuern der Sprühmittel (11) in Abhängigkeit der bestimmten Position.

9. Vorrichtung nach Anspruch 8, **gekennzeichnet durch** Mittel zum Anbringen der Vorrichtung an ein Schneefahrzeug (1), insbesondere an ein Pistenfahrzeug oder ein Schneemobil.

10. Vorrichtung nach Anspruch 8 oder 9, **dadurch gekennzeichnet, dass** die Positionsbestimmungsmittel einen Empfänger (8.1) für ein Navigationssystem, insbesondere GPS oder GLONASS, umfassen.

11. Vorrichtung nach Anspruch 10, **dadurch gekennzeichnet, dass** die Positionsbestimmungsmittel mindestens zwei voneinander beabstandet angeordnete Empfänger (8.1, 8.2) für das Navigationssystem umfassen.

12. Vorrichtung nach einem der Ansprüche 8-11, **dadurch gekennzeichnet, dass** die Steuerungsmittel (9) Speichermittel (9.1) zum Speichern bestimmter Positionen und Mittel (9.2, 9.4, 9.5) zum automatischen Steuern der Sprühmittel (11) abhängig von den gespeicherten Positionen umfassen.

13. Vorrichtung nach Anspruch 12, **gekennzeichnet durch** Mittel zum Bestimmen einer momentanen Geschwindigkeit der Vorrichtung bezüglich der Fläche (26), wobei die Steuerungsmittel (9) Mittel zum Steuern der Sprühmittel abhängig von der bestimmten momentanen Geschwindigkeit umfassen.

14. Vorrichtung nach Anspruch 12 oder 13, **dadurch gekennzeichnet, dass** die Steuerungsmittel (9) Mittel zum Verzerren von Bilddaten in Abhängigkeit von Winkeln zwischen der Fläche (26) und einer vorgegebenen Beobachtungsrichtung umfassen.
